# EUROPÄISCHE PATENTANMELDUNG

(11) **EP 4 799 802 A1**
(43) Veröffentlichungstag der Anmeldung: **02.09.2026**
(21) Anmeldenummer: 26156211.0
(22) Anmeldetag: 04.02.2026
(51) Int. Cl.: B29D 30/06, B29C 33/02

(54) **CONTAINER FÜR EINE REIFENFORM, REIFENFORM SOWIE VERFAHREN ZUR VULKANISIERUNG**

(30) Priorität: 21.02.2025 DE 102025106614
(71) Anmelder: Herbert Maschinen- und Anlagenbau GmbH & Co. KG, 36088 Hünfeld (DE)
(72) Erfinder: Ortelt, John, 36088 Hünfeld (DE); Popp, Sebastian, 36100 Petersberg (DE)
(74) Vertreter: advotec.

(57) **Zusammenfassung**

Die Erfindung betrifft einen Schließring (11) für eine Reifenform (10) zur Vulkanisierung von Reifenrohlingen sowie eine Reifenform und ein Verfahren zur Vulkanisierung von Reifenrohlingen, wobei der Schließring eine Heizvorrichtung (15) zur Beheizung der Reifenform ausweist, wobei der Schließring aus einer Mehrzahl von Segmentaufnahmen (12) zur Aufnahme von Reifenformsegmenten (13) der Reifenform gebildet ist, wobei die Segmentaufnahmen mit jeweils einer elektrischen Heizeinrichtung (16) der Heizvorrichtung ausgebildet sind.

## Beschreibung

Die Erfindung betrifft einen Container für eine Reifenform zur Vulkanisierung von Reifenrohlingen, wobei der Container eine Heizvorrichtung zur Beheizung der Reifenform aufweist. Weiter betrifft die Erfindung eine Reifenform zur Vulkanisierung von Reifenrohlingen. Ferner betrifft die Erfindung ein Verfahren zur Vulkanisierung von Reifenrohlingen mittels einer Reifenform.

Ein Container der eingangs bezeichneten Art ist aus dem Stand der Technik hinlänglich bekannt und ist regelmäßig ein Bestandteil einer Reifenform zur Vulkanisierung von Reifenrohlingen, welche neben dem Schließlich üblicherweise eine Mehrzahl von radial bewegbaren Reifenformsegmenten umfasst, welche zu einem Zusammenwirken mit dem Container ausgebildet sind. Insbesondere werden die Reifenformsegmente in einer Schließstellung der Reifenform, in welcher die Reifenformsegmente von dem Container zusammengehalten werden, zu einem Formring zur Ausbildung einer profilierten Lauffläche eines Reifens zusammengefügt. Der Container seinerseits weist typischerweise einen Aufnahmerahmen auf, welcher zur Aufnahme von einem Heizfluid, wie beispielsweise Wasserdampf, vorgesehen ist, mittels welchem die Reifenform zwecks Durchführung einer Vulkanisierung eines in die Reifenform eingebrachten Reifenrohlings beheizt werden kann. Wasserdampf ist regelmäßig in Produktionsstätten zur Herstellung von Reifen einfach und kostengünstig verfügbar.

Eine Reifenform mit einem derartigen Container geht beispielsweise aus der DE 3 631 533 A1 hervor. Hier ist der Container Bestandteil eines Formoberteils der Reifenform und die Reifenformsegmente sind Bestandteil eines Formunterteils der Reifenform. Weiter ist es aus dem Stand der Technik bekannt, neben dem Container auch die Reifenformsegmente als Bestandteile eines Formoberteils einer Reifenform vorzusehen.

Ein weiterer Container ist aus der DE 10 2022 127 194 A1 bekannt, wobei hier in dem Container ein in einer Umfangsrichtung des Containers mäanderförmig verlaufender Kanal zur Durchleitung von Wasserdampf ausgebildet ist.

Nachteilig bei den bekannten Containern ist, dass der Container aufgrund des darin ausgebildeten Kanals zur Durchleitung eines Heizfluides nur aufwendig herzustellen ist. Weiter erfolgt eine indirekte Beheizung der Reifenformsegmente, wenn diese in dem Formunterteil getrennt von dem Container angeordnet sind. So muss dann auch der Container zusammen mit der Reifenform auf die erforderliche Betriebstemperatur erwärmt werden, wozu vergleichsweise viel Wärmeenergie aufgewendet werden muss. Darüber hinaus ist eine Temperierung schwierig, da entlang des Umfangs des Containers bzw. der Reifenform eine vergleichsweise gleichmäßige Verteilung von Wärmeenergie erfolgen sollte. Dies ist jedoch aufgrund der Beheizung mit Wasserdampf nicht immer in der gewünschten Weise möglich. Weiter kann aufgrund der Beheizung mit Wasserdampf eine gewünschte Betriebstemperatur des Containers nur innerhalb eines großen Toleranzbereiches eingestellt bzw. geregelt werden.

Der vorliegenden Erfindung liegt daher die Aufgabe zugrunde, einen Container für eine Reifenform, eine Reifenform sowie ein Verfahren zur Vulkanisierung von Reifenrohlingen vorzuschlagen, welcher bzw. welche bzw. welches eine verbesserte Beheizung der Reifenform ermöglicht.

Diese Aufgabe wird durch einen Container mit den Merkmalen des Anspruchs 1, eine Reifenform mit den Merkmalen des Anspruchs 18 sowie ein Verfahren mit den Merkmalen des Anspruchs 20 gelöst.

Der erfindungsgemäße Container für eine Reifenform zur Vulkanisierung von Reifenrohlingen weist eine Heizvorrichtung zur Beheizung der Reifenform auf, wobei der Container aus einer Mehrzahl von Segmentaufnahmen zur Aufnahme von Reifenformsegmenten der Reifenform gebildet ist, wobei die Segmentaufnahmen mit jeweils einer elektrischen Heizeinrichtung der Heizvorrichtung ausgebildet sind.

Erfindungsgemäß ist die Heizvorrichtung aus einer Mehrzahl von elektrischen Heizeinrichtungen gebildet, wobei dann keine vollständig geschlossene Ausbildung eines Containers erforderlich ist, wie das bei der Ausbildung eines Containers mit einem am Umfang umlaufenden Fluidkanal der Fall wäre. So kann jede der Segmentaufnahmen, die dazu ausgebildet sind, Reifenformsegmente der Reifenform aufzunehmen, unmittelbar mit der jeweiligen elektrischen Heizeinrichtung beheizt werden. Eine örtliche Trennung von Heizvorrichtung und Segmentaufnahmen ist daher nicht mehr erforderlich. Hierdurch wird es möglich, Wärmeenergie unmittelbar auf die Segmentaufnahmen zu übertragen. Durch die direkte Beheizung der Segmentaufnahmen entstehen weniger Wärmeverluste, insbesondere da nicht der gesamte Container temperiert werden muss. Darüber hinaus ist eine Einstellung einer Betriebstemperatur nicht von einer Temperatur des Wasserdampfes abhängig, weniger träge und damit genauer möglich. Weiter kann der Container insgesamt kompakter ausgebildet werden, da der Container nicht vollständig geschlossen ausgebildet sein muss. Darüber hinaus kann auf eine Verwendung von Prozesswärme in Form von Wasserdampf verzichtet werden und eine Umstellung einer Produktion auf eine CO₂-neutrale Energieversorgung wird einfacher möglich.

Die Heizeinrichtung der Segmentaufnahme kann durch zumindest ein Widerstandsheizelement ausgebildet sein. Das Widerstandsheizelement kann ein elektrischer Rohrheizkörper, eine Heizpatrone, eine Heizwendel oder dergleichen sein. Das Widerstandsheizelement kann an oder in der Segmentaufnahme angeordnet sein. Weiter können auch eine Mehrzahl von Widerstandsheizelementen an der Segmentaufnahme vorgesehen sein. So können auch verschiedene Heizzonen ausgebildet werden, die unabhängig voneinander angesteuert werden können. Derartige Widerstandsheizelemente sind kostengünstig erhältlich und können einfach an eine Größe und eine Form der Segmentaufnahme angepasst werden.

Das Widerstandsheizelement kann an einer dem Reifenformsegment abgewandten Außenseite der Segmentaufnahme angeordnet sein. Das Widerstandsheizelement ist dann besonders einfach an der Segmentaufnahme montierbar. Weiter wird auch ein Anschluss des Widerstandsheizelements an eine Stromversorgung so wesentlich erleichtert. Beispielsweise kann an dem Container ein umlaufender Kabelkanal oder eine Kabelführung vorgesehen sein, die einen entsprechenden Anschluss der Widerstandsheizelemente ermöglicht.

Das Widerstandsheizelement kann in einer in der Außenseite ausgebildeten Ausnehmung angeordnet sein. Die Ausnehmung kann in Art einer Nut ausgebildet sein. Die Nut kann mäanderförmig oder spiralförmig ausgebildet sein, so dass sich eine möglichst homogene Verteilung von Wärmeenergie von dem Widerstandsheizelement auf die Segmentaufnahme ergibt. Prinzipiell ist es auch möglich, plattenförmige Widerstandsheizelemente zu verwenden, die dann jeweils in eine entsprechende Ausnehmung eingesetzt sein können.

Die Außenseite kann mit einer wärmeisolierenden Platte der Segmentaufnahme abgedeckt sein. Die wärmeisolierende Platte kann aus einem feuerfesten, schlecht wärmeleitenden Material bestehen. Mittels der Platte kann eine Abgabe von Wärmeenergie an eine Umgebung und damit ein Wärmeverlust vermindert werden.

An den Segmentaufnahmen kann jeweils ein Temperatursensor der Heizvorrichtung angeordnet sein, wobei die Heizvorrichtung eine Steuereinrichtung zur Temperaturregelung der Heizeinrichtungen aufweisen kann. Der Temperatursensor kann ein Widerstandsthermometer oder dergleichen sein. Somit wird es möglich, mittels der Steuereinrichtung die Heizeinrichtungen der jeweiligen Segmentaufnahmen unabhängig voneinander anzusteuern und deren Temperatur zu regeln. Insgesamt kann so eine gleichmäßigere Temperaturverteilung über einen Umfang der Reifenform erzielt werden. Weiter wird es auch möglich, auf eventuelle Temperaturänderungen von einzelnen oder mehreren Segmentaufnahmen durch die individuelle Temperaturregelung der Segmentaufnahmen zu reagieren. Insgesamt ist es so möglich, eine gewünschte Betriebstemperatur der Reifenform noch genauer innerhalb eines vergleichsweise engen Toleranzbereiches auszubilden.

Die Segmentaufnahmen können relativ zueinander radial bewegbar ausgebildet sein, wobei die Segmentaufnahmen mittels einer Betätigungsvorrichtung des Containers in eine Öffnungsposition und in eine Schließposition der Reifenform gebracht werden können. In der Öffnungsposition kann dann ein Reifenrohling in die Reifenform eingelegt, in der Schließposition vulkanisiert und in der darauf folgenden Öffnungsposition wieder aus der Reifenform entnommen werden. Das Öffnen und Schließen der Reifenform kann automatisiert mittels der Betätigungsvorrichtung erfolgen. Die Segmentaufnahmen mit den dann an den Segmentaufnahmen aufgenommenen Reifenformsegmenten können mittels der Betätigungsvorrichtung in einer radialen Richtung, relativ bezogen auf die Reifenform bzw. einen Reifen, zur Bildung eines Formrings zusammengeführt oder auseinanderbewegt werden.

Die Betätigungsvorrichtung kann mit zumindest einem Zwischenlageelement an der Außenseite befestigt sein. Die Betätigungsvorrichtung ist dann nicht unmittelbar mit der Segmentaufnahme verbunden. Das Zwischenlageelement kann beispielsweise in Art einer Platte ausgebildet sein. Ist Betätigungsvorrichtung beispielsweise durch einen Steg oder Stege mit der Segmentaufnahme verbunden, können diese Stege jeweils über ein Zwischenlageelement an der Außenseite befestigt sein. Das Zwischenlageelement kann beispielsweise aus Edelstahl bestehen. Edelstahl hat eine vergleichsweise geringere Wärmeleitfähigkeit als Baustahl und verfügt aber gleichzeitig über eine hohe Druckfestigkeit. So kann eine sichere Verbindung zwischen der Betätigungsvorrichtung und der Segmentaufnahme ausgebildet werden, die zumindest teilweise wärmeisolierende Eigenschaften hat. Ein Wärmeverlust der Segmentaufnahme über die Betätigungsvorrichtung kann so wirkungsvoll vermindert werden. Sofern eine wärmeisolierende Platte auf die Außenseite der Segmentaufnahme aufgebracht ist, kann die wärmeisolierende Platte eine Ausnehmung bzw. Durchgangsöffnung aufweisen, innerhalb derer das Zwischenlageelement angeordnet ist. Alternativ kann die wärmeisolierende Platte auch durchgängig und druckfest ausgebildet sein.

Der Container kann mit einer oberen Aufnahmeplatte und einer parallelen unteren Aufnahmeplatte ausgebildet sein, wobei die Aufnahmeplatten zwischen Stößeln einer Presse angeordnet werden können. Mittels der Presse kann dann eine Kraft auf die obere und die untere Aufnahmeplatte ausgeübt werden derart, dass die Reifenform in die Schließposition gebracht wird. Bei einer gegenläufigen Bewegung der Stößel der Presse kann die Reifenform in die Öffnungsposition gebracht werden. Beispielsweise kann vorgesehen sein, dass die obere Aufnahmeplatte und/oder die untere Aufnahmeplatte an dem jeweiligen Stößel der Presse fest fixiert ist.

Die Segmentaufnahmen können über jeweils ein Schubgelenkgetriebe der Betätigungsvorrichtung mit der oberen Aufnahmeplatte oder der unteren Aufnahmeplatte verbunden sein. Mittels des Schubgelenkgetriebes kann eine Kraft der Stößel der Presse, welche in einer axialen Richtung des Containers wirkt, in eine Kraft umgelenkt werden, die quer bzw. in einer radialen Richtung des Containers wirkt, derart, dass dann mit der Betätigungsvorrichtung eine radiale Bewegung der Segmentaufnahmen ausgeführt wird. Weiter ist ein Schubgelenkgetriebe einfach und kostengünstig herzustellen.

Die obere Aufnahmeplatte oder die untere Aufnahmeplatte kann durch eine Führungsplatte und einen relativ zu der Führungsplatte axial bewegbaren Betätigungsring gebildet sein. Der Betätigungsring kann dabei vorzugsweise die Führungsplatte radial zumindest teilweise, bevorzugt vollständig umgeben. Prinzipiell ist es aber auch möglich, den Betätigungsring oberhalb der Führungsplatte bzw. einer Führungsplatte der unteren Aufnahmeplatte anzuordnen. Mittels des Betätigungsrings der Betätigungsvorrichtung wird es dann möglich, die Segmentaufnahmen zu bewegen bzw. eine Kraft der Stößel auf die Segmentaufnahmen zu übertragen.

Das Schubgelenkgetriebe kann jeweils aus einem ersten Schubgelenk, einem zweiten Schubgelenk und eine die Schubgelenke verbindende Koppel gebildet sein, wobei das erste Schubgelenk an der jeweiligen Segmentaufnahme angeordnet sein kann, und wobei das zweite Schubgelenk an dem Betätigungsring angeordnet sein kann. Die Schubgelenke können mit der Koppel über jeweils eine Achse verbunden sein, wobei die jeweilige Achse als ein Bolzen oder auch durch die Koppel oder einen Gelenkkörper des jeweiligen Schubgelenks ausgebildet sein kann. Prinzipiell ist es jedoch auch möglich, dass die Schubgelenke und die Koppel über beispielsweise ein Kugelgelenk oder dergleichen verbunden sind. Weiter kann die Koppel in Art eines Stabs ausgebildet sein, über den eine Zugkraft und eine Druckkraft übertragen werden kann. In einer besonders einfachen Ausführungsform kann das erste Schubgelenk formschlüssig, kraftschlüssig oder stoffschlüssig mit der Segmentaufnahme verbunden sein oder auch durch die Segmentaufnahme selbst ausgebildet sein. Das zweite Schubgelenk kann ebenfalls formschlüssig, kraftschlüssig oder stoffschlüssig an dem Betätigungsring befestigt oder durch den Betätigungsring selbst ausgebildet sein. Eine axiale Bewegung des Betätigungsrings relativ zu der Führungsplatte bewirkt über das Schubgelenkgetriebe eine radiale Bewegung der Segmentaufnahmen. Der Betätigungsring kann auch so ausgebildet sein, dass über den Betätigungsring eine Schließkraft der Reifenform eingestellt werden kann. Hierzu ist es dann lediglich erforderlich, eine axiale Bewegung des Betätigungsrings relativ zu der Führungsplatte zu begrenzen oder zu erweitern.

Das erste Schubgelenk kann an einer dem Reifenformsegment abgewandten Außenseite der jeweiligen Segmentaufnahme angeordnet sein, wobei die Segmentaufnahme mit einer Führungseinrichtung der Betätigungsvorrichtung an der Führungsplatte radial geführt sein kann. Beispielsweise können in der Führungsplatte in radialer Richtung verlaufende Nuten ausgebildet sein, in denen die Segmentaufnahme geführt ist. Die Nuten können beispielsweise als eine sogenannte T-Nut ausgebildet sein, in die ein übereinstimmend ausgebildeter Nutenstein der Segmentaufnahme eingesetzt ist. Der Nutenstein kann einfach mittels Schrauben an der Segmentaufnahme befestigt sein, so dass eine einfache Montage und Demontage der Segmentaufnahme an der Führungsplatte ermöglicht wird.

Die Segmentaufnahmen können über jeweils ein Spanngetriebe einer Betätigungsvorrichtung mit der oberen Aufnahmeplatte oder der unteren Aufnahmeplatte verbunden sein. Das Spanngetriebe kann beispielsweise durch eine schiefe Ebene oder dergleichen ausgebildet sein. Dabei kann dann eine axiale Bewegung in eine radiale Spannbewegung überführt werden. Ein derartiges Spanngetriebe ist besonders einfach ausbildbar und erlaubt ein verlässliches Öffnen und Schließen einer Reifenform.

Die obere Aufnahmeplatte oder die untere Aufnahmeplatte kann durch eine Führungsplatte und einen relativ zu der Führungsplatte axial bewegbaren konischen Spannring gebildet sein, wobei die Segmentaufnahme mit einer Führungseinrichtung der Betätigungsvorrichtung an der Führungsplatte radial geführt sein kann, wobei die Segmentaufnahme über eine an einem Innenkonus des Spannrings ausgebildete Querführung mit dem Spannring verbunden sein kann. Mittels des konischen Spannrings kann eine Kraft der Stößel der Presse, welche in einer axialen Richtung des Containers wirkt, in eine Kraft umgelenkt werden, die quer bzw. in einer radialen Richtung des Containers wirkt, derart, dass dann mit der Betätigungsvorrichtung eine radiale Bewegung der Segmentaufnahmen ausgeführt wird. Der konische Spannring kann dabei vorzugsweise die Führungsplatte radial zumindest teilweise, bevorzugt vollständig umgeben. Mittels des konischen Spannrings wird es dann möglich, die Segmentaufnahmen zu bewegen bzw. eine Kraft der Stößel auf die Segmentaufnahmen zu übertragen. Die Segmentaufnahmen sind dann entlang der Führungsplatte radial geführt, beispielsweise wie bei dem zuvor beschriebenen Schubgelenkgetriebe. Weiter kann an dem Innenkonus des Spannrings eine Querführung ausgebildet sein, die eine Bewegung der Segmentaufnahme relativ zu dem Spannring in einer Querrichtung entlang des Innenkonus ermöglicht. Die Querführung kann zwischen dem Innenkonus und der Außenseite der Segmentaufnahme ausgebildet sein. Die Querführung kann eine Linearführung oder dergleichen sein. Eine Bewegung des Spannrings in axialer Richtung bewirkt dann eine Bewegung der Segmentaufnahme an der Querführung und damit gleichzeitig eine Bewegung der Segmentaufnahme in radialer Richtung an der Führungsplatte. Hierdurch wird eine besonders präzise Positionierung der Segmentaufnahme beim Öffnen und Schließen möglich.

Der Container kann 6 bis 23 Segmentaufnahmen aufweisen. Der Container kann dann zur Herstellung von Reifen unterschiedlichster Fahrzeuge, wie Fahrrad, PKW, LKW, Bus, Flugzeug oder auch für andere Arten von Reifen genutzt werden. Die Anzahl der Segmentaufnahmen kann je nach Größe der herzustellenden Reifen variieren. Mit der hier angegeben Anzahl der Segmentaufnahmen in dem Bereich von 6 bis 23 sind alle in diesem Bereich enthaltenen Zahlen jeweils für sich einzeln genannt.

Der Container kann mit einer den Container zumindest teilweise umgebenden wärmeisolierenden Haube ausgebildet sein. Mittels der wärmeisolierenden Haube kann ein Bediener der Reifenform vor Wärmestrahlung und einem unerwünschten Körperkontakt mit der Reifenform geschützt werden. Weiter kann ein Wärmeabfluss von der Reifenform vermindert werden.

Die erfindungsgemäße Reifenform zur Vulkanisierung von Reifenrohlingen umfasst einen erfindungsgemäßen Container.

Die Reifenform kann eine Mehrzahl von radial bewegbaren Reifenformsegmenten umfassen, welche zu einem Zusammenwirken mit dem Container ausgebildet sind derart, dass die Reifenformsegmente in einer Schließposition der Reifenform, in welcher die Reifenformsegmente von dem Container zusammengehalten werden können, zu einem Formring zur Ausbildung einer Lauffläche eines Reifens zusammenfügbar sein können bzw. sich zu diesem ergänzen können. Die Lauffläche kann eine unprofilierte oder eine profilierte Lauffläche sein.

Weitere vorteilhafte Ausführungsformen der Reifenform ergeben sich aus den Merkmalsbeschreibungen der auf den Anspruch 1 rückbezogenen Unteransprüche.

Bei dem erfindungsgemäßen Verfahren zur Vulkanisierung von Reifenrohlingen mittels einer Reifenform wird die Reifenform mittels einer Heizvorrichtung eines Containers beheizt, wobei der Container aus einer Mehrzahl von Segmentaufnahmen zur Aufnahme von Reifenformsegmenten der Reifenform gebildet wird, wobei die Beheizung der Reifenform mittels der Segmentaufnahmen mit jeweils einer elektrischen Heizeinrichtung der Heizvorrichtung erfolgt. Zu den Vorteilen des erfindungsgemäßen Verfahrens wird auf die Vorteilsbeschreibung des erfindungsgemäßen Containers verwiesen.

Weitere vorteilhafte Ausführungsformen des Verfahrens ergeben sich aus den Merkmalsbeschreibungen der auf den Anspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine perspektivische Ansicht einer Reifenform;
- **Fig. 2**: eine Draufsicht der Reifenform;
- **Fig. 3**: eine Schnittansicht entlang einer Linie **III-III** aus **Fig. 2** mit der Reifenform in einer Schließposition;
- **Fig. 4**: eine Teilschnittansicht entlang der Linie **III-III** aus **Fig. 2** mit der Reinform in einer Öffnungsposition;
- **Fig. 5**: eine Schnittansicht entlang einer Linie **V-V** aus **Fig. 2****;**
- **Fig. 6**: eine perspektivische Ansicht einer Segmentaufnahme;
- **Fig. 7**: eine Explosionsdarstellung der Segmentaufnahme aus **Fig. 6****;**
- **Fig. 8**: eine Vorderansicht der Segmentaufnahme aus **Fig. 6****;**
- **Fig. 9**: eine Schnittansicht entlang einer Linie **IX-IX** aus **Fig. 8****;**
- **Fig. 10**: eine Draufsicht der Segmentaufnahme aus **Fig. 6****;**
- **Fig. 11**: eine perspektivische Ansicht einer weiteren Reifenform;
- **Fig. 12**: eine Draufsicht der weiteren Reifenform;
- **Fig. 13**: eine Schnittansicht entlang einer Linie XIII-XIII aus **Fig. 12** mit der weiteren Reifenform in einer Schließposition;
- **Fig. 14**: eine Teilschnittansicht entlang einer Linie XIII-XIII aus **Fig. 12** mit der weiteren Reifenform in einer Öffnungsposition;
- **Fig. 15**: eine Schnittansicht entlang einer Linie XV-XV aus **Fig. 12****;**
- **Fig. 16**: eine perspektivische Ansicht einer weiteren Segmentaufnahme;
- **Fig. 17**: eine Explosionsdarstellung der weiteren Segmentaufnahme aus **Fig. 16****.**

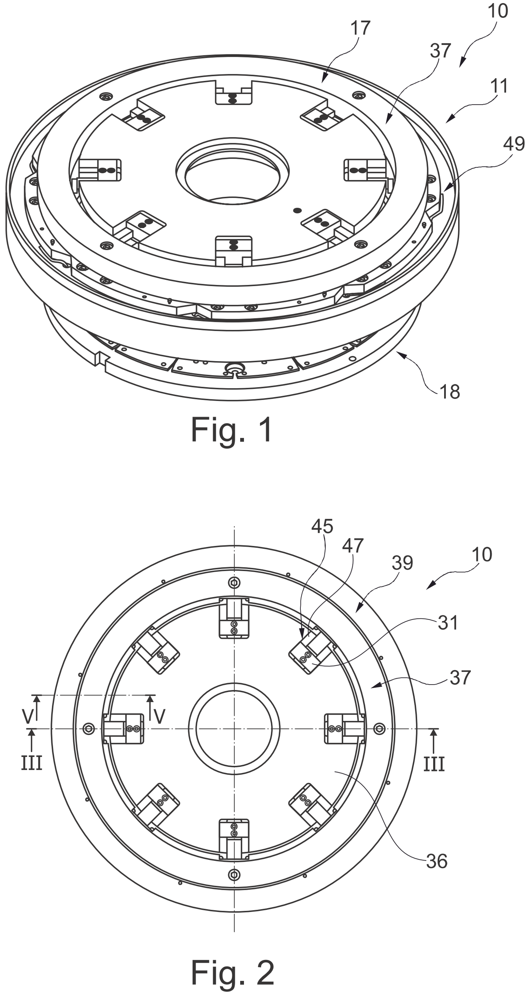

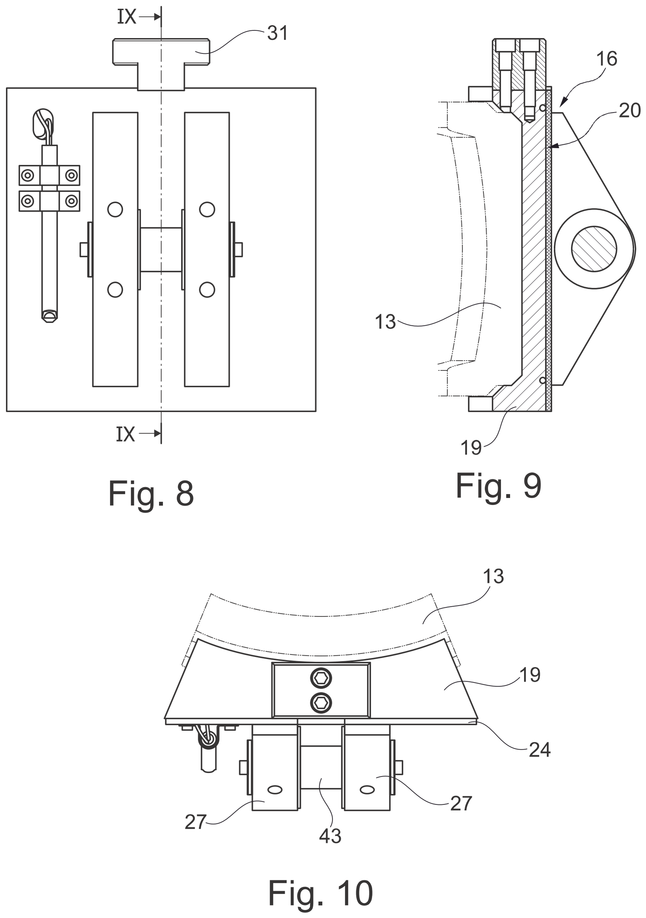

Die **Fig. 1** bis **10** zeigen eine Reifenform 10 mit einem Container 11 sowie eine Segmentaufnahme 12 des Containers 11 in verschiedenen Darstellungen. Die Reifenform 10 dient zur Vulkanisierung von hier nicht näher dargestellten Reifenrohlingen und umfasst andeutungsweise dargestellte Reifenformsegmente 13 und Reifenformschalen 14, die an dem Container 11 angeordnet sind. Insbesondere die Reifenformsegmente 13 dienen zur Ausbildung einer Lauffläche eines Reifens und sind mit den Segmentaufnahmen 12 fest verbunden und somit radial bewegbar. Die Reifenformsegmente 14 dienen zur Ausbildung einer Seitenwand eines Reifens und sind relativ zueinander in axialer Richtung bewegbar an dem Container 11 befestigt.

Der Container 11 ist mit einer Heizvorrichtung 15 zur Beheizung der Reifenform 10 ausgebildet, wobei die Segmentaufnahmen 12 mit jeweils einer elektrischen Heizeinrichtung 16 der Heizvorrichtung 15 ausgebildet sind. Die Heizvorrichtung 15 umfasst eine hier nicht näher dargestellte Steuereinrichtung zur Temperaturregelung der Heizeinrichtungen 16. Der Container ist mit einer oberen Aufnahmeplatte 17 und mit einer unteren Aufnahmeplatte 18 ausgebildet, die zwischen Stößeln einer hier nicht dargestellten Presse angeordnet werden können. Die Reifenformschalen 14 sind an der oberen Aufnahmeplatte 17 und der unteren Aufnahmeplatte 18 befestigt. Weiter ist der Container 11 in der hier dargestellten Ausführungsform mit acht Segmentaufnahmen 12 ausgebildet, die jeweils eines der Reifenformsegmente 13 aufnehmen.

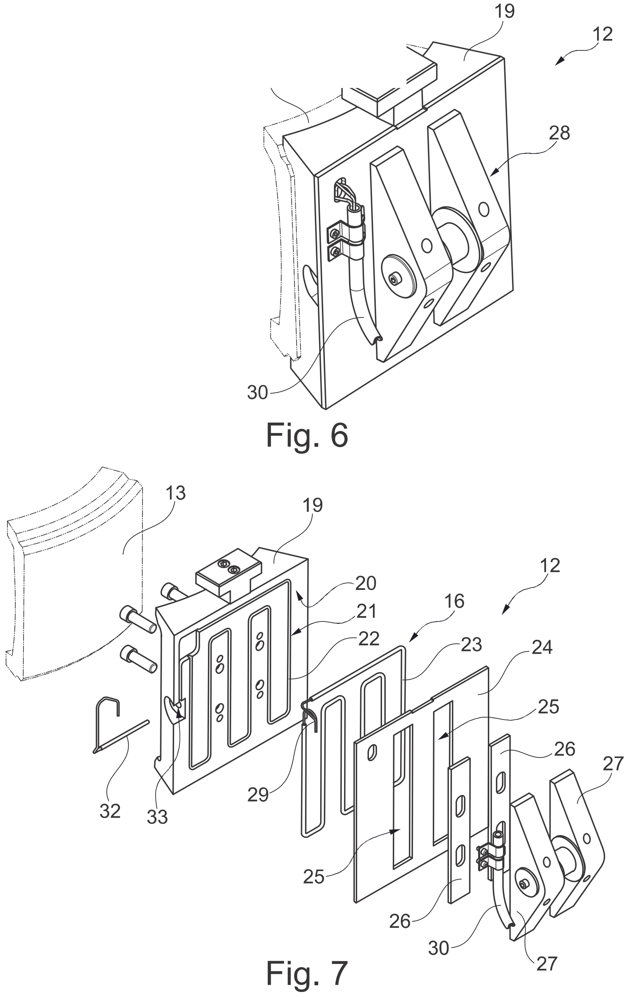

Wie aus einer Zusammenschau der **Fig. 6** bis **10** hervorgeht, ist die Segmentaufnahme 12 aus einem schalenförmigen Aufnahmekörper 19 gebildet, in dessen Außenseite 20 eine Ausnehmung 21 in Form einer Nut 22 eingebracht ist. In die mäanderförmig ausgebildete Nut 22 ist ein elektrisches Widerstandsheizelement 23 der Heizeinrichtung 16 eingesetzt. Die Außenseite 20 ist weiter mit einer wärmeisolierten Platte 24 abgedeckt. In der wärmeisolierenden Platte 24 sind Ausnehmungen 25 ausgebildet, in die plattenförmige Zwischenlageelemente 26 aus Edelstahl eingesetzt sind. Stege 27 eines ersten Schubgelenks 28 sind mit den Zwischenlageelementen 26 und im Aufnahmekörper 19 fest verschraubt. Weiter ist für das Widerstandsheizelement 23eine elektrische Anschlussleitung 29, die abschnittsweise durch einen Metallschlauch 30 verlegt ist, vorgesehen. Darüber hinaus ist an dem Aufnahmekörper 19 ein Nutenstein 31 befestigt. Zur Regelung einer Temperatur des Aufnahmekörpers 19 mit der Heizvorrichtung 15 umfasst die Heizeinrichtung 16 noch einen Temperatursensor 32, der in eine Bohrung 33 in dem Aufnahmekörper 19 eingesetzt ist.

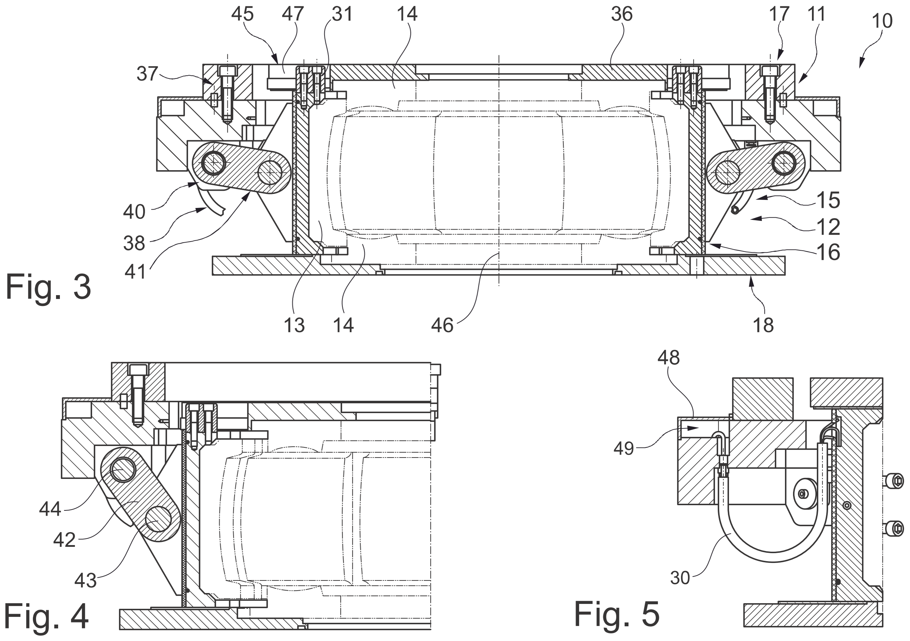

Die **Fig. 3** bis **5** zeigen Schnittdarstellungen der Reifenform 10 mit der Reifenform 10 in einer Öffnungsposition 34 und in einer Schließposition 35. Dabei ist vorgesehen, die untere Aufnahmeplatte 18 auf einem Stößel einer Presse anzuordnen. Die obere Aufnahmeplatt 17 ist hier durch eine Führungsplatte 36 und einem Betätigungsring 37 gebildet. Auch die obere Aufnahmeplatte 17 ist an einem gegenüberliegenden Stößel der Presse angeordnet, wobei der Betätigungsring 37 relativ zur Führungsplatte 36 in axialer Richtung mittels dieses Stößels bewegbar ist. Die Segmentaufnahmen 12 sind jeweils über ein Schubgelenkgetriebe 38 mit dem Betätigungsring 37 verbunden. Die Segmentaufnahmen 12 bilden so zusammen mit dem Betätigungsring 37 eine Betätigungsvorrichtung 39 des Containers 11 aus. Das Schubgelenkgetriebe 38 ist aus dem ersten Schubgelenk 28, einem zweiten Schubgelenk 40 an dem Betätigungsring 37 und eine die Schubgelenke 28 und 40 verbindende Koppel 41 gebildet. Die Koppel 41 ist hier durch einen Stab 42 ausgebildet, der an einer Achse 43 des ersten Schubgelenks 28 und an einer Achse 44 des zweiten Schubgelenks 40 schwenkbar gehaltert ist.

Die Führungsplatte 36 bildet für jede Segmentaufnahme 12 eine Radialführung 45 aus, entlang der die Segmentaufnahmen 12 in radialer Richtung relativ bezogen auf eine Mittelachse 46 der Reifenform 10, bewegbar sind. Die Radialführung 45 ist durch jeweils eine Führungsnut 47, in die der Nutenstein 31 eingesetzt ist, ausgebildet. Eine Relativbewegung des Betätigungsrings 37 in axialer Richtung bezogen auf die Mittelachse 46 und relativ zu der Führungsplatte 36 bewirkt bei einem Auseinanderbewegen von Betätigungsring 37 und unterer Aufnahmeplatte 18 eine Bewegung der Segmentaufnahmen 12 in der radialen Richtung in die Öffnungsposition 34 und bei einem Zusammenführung von Betätigungsring 37 und unterer Aufnahmeplatte 18 eine radiale Bewegung der Segmentaufnahmen 12 zu der Mittelachse 46 hin und damit eine Überführung in die Schließposition 35.

Die Anschlussleitungen 29 sind in einem am Betätigungsring 37 mit einer Abdeckung 48 ausgebildeten Kabelkanal 49 zusammengeführt, so dass ein hier nicht dargestellter zentraler elektrischer Anschluss an die Steuervorrichtung des Containers 11 erfolgen kann.

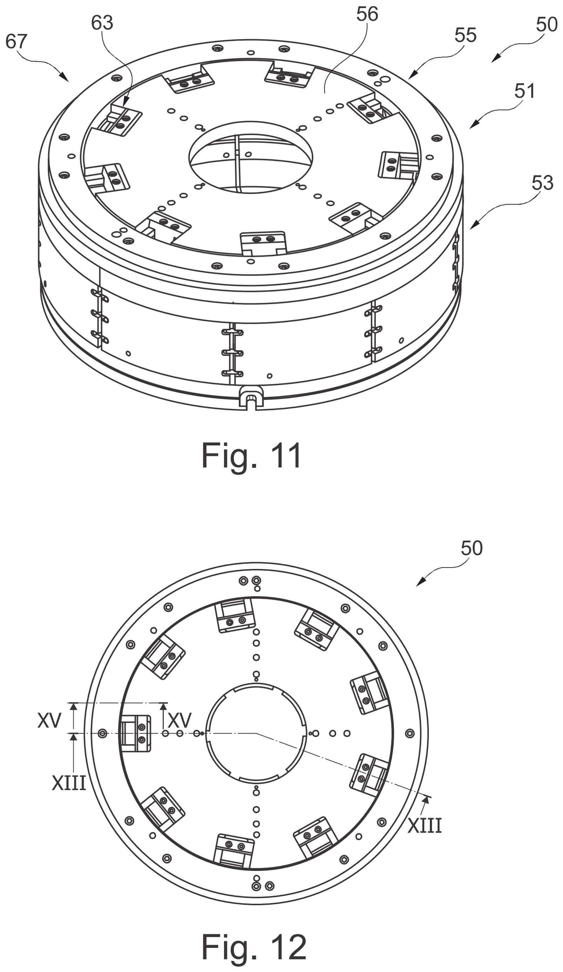

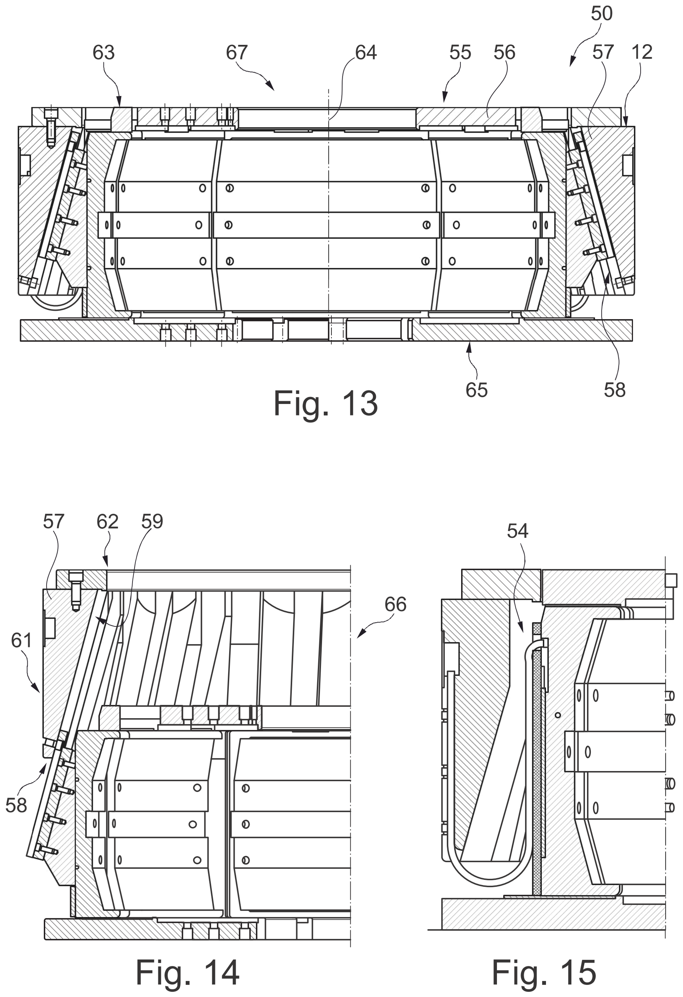

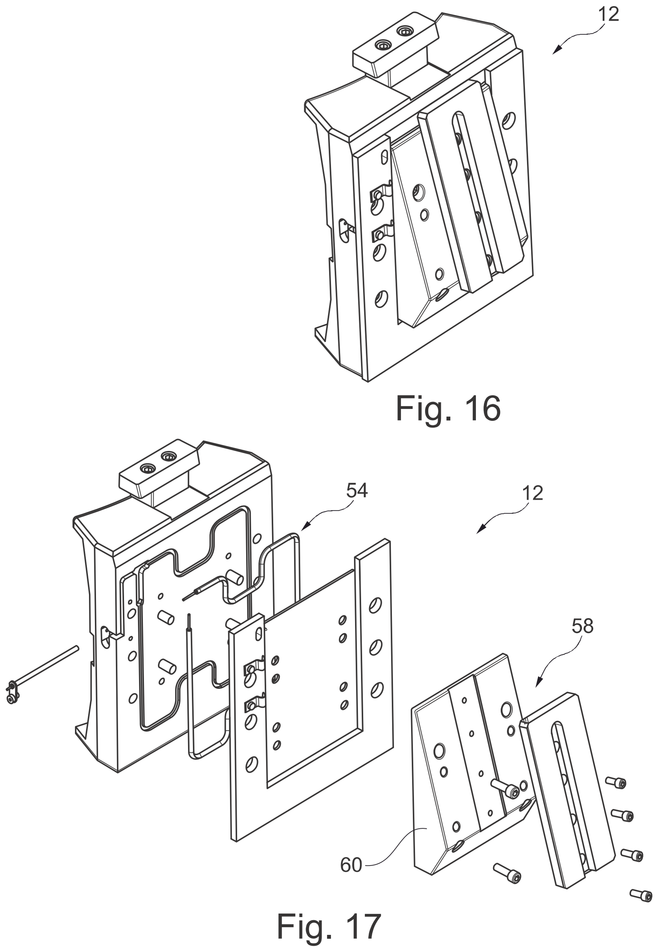

Die **Fig. 11** bis **17** zeigen eine Reifenform 50 mit einem Container 51 sowie eine Segmentaufnahme 52 des Containers 51 in verschiedenen Darstellungen. Der Container 51 ist mit einer Heizvorrichtung 53 zur Beheizung der Reifenform 50 ausgebildet, wobei die Segmentaufnahmen 52 mit jeweils einer elektrischen Heizeinrichtung 54 der Heizvorrichtung 53 ausgebildet sind. Im Unterschied zu der Reifenform aus den **Fig. 1** bis **10** ist hier eine obere Aufnahmeplatte 55 durch eine Führungsplatte 56 und einen konischen Spannring 57 gebildet. Die Segmentaufnahmen 52 sind jeweils über Querführungen 58 mit einem Innenkonus 59 des Spannrings 57 bewegbar verbunden. Die Querführungen 58 sind jeweils ihrerseits über einen Steg 60 an der jeweiligen Segmentaufnahme 52 angeordnet. Der konische Spannring 57 bildet so zusammen mit den Querführungen 58 und den Segmentaufnahmen 52 ein Spanngetriebe 61 einer Betätigungsvorrichtung 62 der Reifenform 50 aus.

Weiter bildet die Führungsplatte 56 eine Radialführung 63 für jede der Segmentaufnahmen 52 aus. Eine Relativbewegung des konischen Spannrings 57 in axialer Richtung bezogen auf eine Mittelachse 64 der Reifenform 50 und relativ zu der Führungsplatte 56 bewirkt bei einem Auseinanderbewegen von dem Spannring 57 und einer unteren Aufnahmeplatte 65 eine Bewegung der Segmentaufnahmen 52 in der radialen Richtung in eine Öffnungsposition 66 und bei einem Zusammenführen von dem Spannring 57 und der unteren Aufnahmeplatte 65 eine radiale Bewegung der Segmentaufnahmen 52 zu der Mittelachse 64 hin und damit eine Überführung in eine Schließposition 67.

## Patentansprüche

1. Container (11, 51) für eine Reifenform (10,50) zur Vulkanisierung von Reifenrohlingen, wobei der Container eine Heizvorrichtung (15, 53) zur Beheizung der Reifenform aufweist,
**dadurch gekennzeichnet,**
**dass** der Container aus einer Mehrzahl von Segmentaufnahmen (12, 52) zur Aufnahme von Reifenformsegmenten (13) der Reifenform gebildet ist, wobei die Segmentaufnahmen mit jeweils einer elektrischen Heizeinrichtung (16, 54) der Heizvorrichtung ausgebildet sind.

2. Container nach Anspruch 1,
**dadurch gekennzeichnet,**
**dass** die Heizeinrichtung (16, 54) der Segmentaufnahme (12, 52) durch zumindest ein Widerstandsheizelement (23) ausgebildet ist.

3. Container nach Anspruch 2,
**dadurch gekennzeichnet,**
**dass** das Widerstandsheizelement (23) an einer dem Reifenformsegment (13) abgewandten Außenseite (20) der Segmentaufnahme (12, 52) angeordnet ist.

4. Container nach Anspruch 3,
**dadurch gekennzeichnet,**
**dass** das Widerstandsheizelement (23) in einer in der Außenseite (20) ausgebildeten Ausnehmung (21) angeordnet ist.

5. Container nach Anspruch 3 oder 4,
**dadurch gekennzeichnet,**
**dass** die Außenseite (20) mit einer wärmeisolierenden Platte (24) der Segmentaufnahme (12, 52) abgedeckt ist.

6. Container nach einem der vorangehenden Ansprüche,
**dadurch gekennzeichnet,**
**dass** an den Segmentaufnahmen (12, 52) jeweils ein Temperatursensor (32) der Heizvorrichtung (15, 53) angeordnet ist, wobei die Heizvorrichtung eine Steuereinrichtung zur Temperaturregelung der Heizeinrichtungen (16, 54) aufweist.

7. Container nach einem der vorangehenden Ansprüche,
**dadurch gekennzeichnet,**
**dass** die Segmentaufnahmen (12, 52) relativ zueinander radial bewegbar ausgebildet sind, wobei die Segmentaufnahmen mittels einer Betätigungsvorrichtung (39, 62) des Containers (11, 51) in eine Öffnungsposition (34, 66) und in eine Schließposition (35, 67) der Reifenform (10, 50) bringbar sind.

8. Container nach Anspruch 7,
**dadurch gekennzeichnet,**
**dass** die Betätigungsvorrichtung (39, 62) mit zumindest einem Zwischenlageelement (26) an der Außenseite (20) befestigt ist.

9. Container nach Anspruch 7 oder 8,
**dadurch gekennzeichnet,**
**dass** der Container (11, 51) mit einer oberen Aufnahmeplatte (17, 55) und einer parallelen unteren Aufnahmeplatte (18, 65) ausgebildet ist, wobei die Aufnahmeplatten zwischen Stößeln einer Presse anordbar sind.

10. Container nach Anspruch 9,
**dadurch gekennzeichnet,**
**dass** die Segmentaufnahmen (12) über jeweils ein Schubgelenkgetriebe (38) der Betätigungsvorrichtung (39) mit der oberen Aufnahmeplatte (17) oder der unteren Aufnahmeplatte (18) verbunden sind.

11. Container nach Anspruch 8 oder 9,
**dadurch gekennzeichnet,**
**dass** die obere Aufnahmeplatte (17) oder die untere Aufnahmeplatte (18) durch eine Führungsplatte (36) und einen relativ zu der Führungsplatte axial bewegbaren Betätigungsring (37) gebildet ist.

12. Container nach Anspruch 10,
**dadurch gekennzeichnet,**
**dass** das Schubgelenkgetriebe (38) aus einem ersten Schubgelenk (28), einem zweiten Schubgelenk (40) und eine die Schubgelenke verbindende Koppel (41) gebildet ist, wobei das erste Schubgelenk an der Segmentaufnahme (12) angeordnet ist, wobei das zweite Schubgelenk an dem Betätigungsring (37) angeordnet ist.

13. Container nach Anspruch 11,
**dadurch gekennzeichnet,**
**dass** das erste Schubgelenk (28) an einer dem Reifenformsegment (13) abgewandten Außenseite (20) der Segmentaufnahme (12) angeordnet ist, wobei die Segmentaufnahme mit einer Führungseinrichtung der Betätigungsvorrichtung (39) an der Führungsplatte (36) radial geführt ist.

14. Container nach Anspruch 9,
**dadurch gekennzeichnet,**
**dass** die Segmentaufnahmen (52) über jeweils ein Spanngetriebe (61) einer Betätigungsvorrichtung (62) mit der oberen Aufnahmeplatte (55) oder der unteren Aufnahmeplatte (65) verbunden sind.

15. Container nach Anspruch 14,
**dadurch gekennzeichnet,**
**dass** die obere Aufnahmeplatte (55) oder die untere Aufnahmeplatte (65) durch eine Führungsplatte (56) und einen relativ zu der Führungsplatte axial bewegbaren konischen Spannring (57) gebildet ist, wobei die Segmentaufnahme mit einer Führungseinrichtung der Betätigungsvorrichtung (62) an der Führungsplatte radial geführt ist, wobei die Segmentaufnahme (52) über eine an einem Innenkonus (59) des Spannrings ausgebildeten Querführung (58) mit dem Spannring verbunden ist.

16. Container nach einem der vorangehenden Ansprüche,
**dadurch gekennzeichnet,**
**dass** der Container (11, 51) 6 bis 23 Segmentaufnahmen (12, 52) aufweist.

17. Container nach einem der vorangehenden Ansprüche,
**dadurch gekennzeichnet,**
**dass** der Container (11, 51) mit einer den Container zumindest teilweise umgebenden wärmeisolierenden Haube ausgebildet ist.

18. Reifenform (10, 50) zur Vulkanisierung von Reifenrohlingen, umfassend einen Container (11, 51) nach einem der vorangehenden Ansprüche.

19. Reifenform nach Anspruch 18,
**dadurch gekennzeichnet,**
**dass** die Reifenform (10, 50) eine Mehrzahl von radial bewegbaren Reifenformsegmenten (13) umfasst, welche zu einem Zusammenwirken mit dem Container (11, 51) ausgebildet sind, derart, dass die Reifenformsegmente in einer Schließposition (35, 67) der Reifenform, in welcher die Reifenformsegmente von dem Container zusammengehalten werden, zu einem Formring zur Ausbildung einer Lauffläche eines Reifens zusammenfügbar sind.

20. Verfahren zur Vulkanisierung von Reifenrohlingen mittels einer Reifenform (10, 50), wobei die Reifenform mittels einer Heizvorrichtung (16, 53) eines Containers (11, 51) beheizt wird,
**dadurch gekennzeichnet,**
**dass** der Container aus einer Mehrzahl von Segmentaufnahmen (12, 52) zur Aufnahme von Reifenformsegmenten (13) der Reifenform gebildet wird, wobei die Beheizung der Reifenform mittels der Segmentaufnahmen mit jeweils einer elektrischen Heizeinrichtung (16, 54) der Heizvorrichtung erfolgt.
